**Europäisches Patentamt**

**European Patent Office**

**Office européen des brevets**

(19)

(11)  **EP 1 110 705 A1**

## (12) EUROPEAN PATENT APPLICATION

(43) Date of publication:
    **27.06.2001 Bulletin 2001/26**

(51) Int Cl.⁷: **B29C 69/00**, B29C 45/27

(21) Application number: **00311376.8**

(22) Date of filing: **19.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **20.12.1999 JP 36127999**<br><br>(71) Applicant: **Yazaki Corporation**<br>**Minato-ku, Tokyo (JP)**<br><br>(72) Inventors:<br> • **Kawamura, Norio**<br>   **Haibara-cho, Haibara-gun, Shizuoka (JP)**<br> • **Murashita, Hiroshi**<br>   **Haibara-cho, Haibara-gun, Shizuoka (JP)** | • **Hamamoto, Junichi**<br>  **Haibara-cho, Haibara-gun, Shizuoka (JP)**<br> • **Masuda, Takashi**<br>  **Haibara-cho, Haibara-gun, Shizuoka (JP)**<br> • **Nakashima, Toshimi**<br>  **Haibara-cho, Haibara-gun, Shizuoka (JP)**<br> • **Hiraguchi, Kazuhiko**<br>  **Haibara-cho, Haibara-gun, Shizuoka (JP)**<br> • **Takahashi, Kenji**<br>  **Haibara-cho, Haibara-gun, Shizuoka (JP)**<br><br>(74) Representative: **Brunner, Michael John**<br>**GILL JENNINGS & EVERY**<br>**Broadgate House**<br>**7 Eldon Street**<br>**London EC2M 7LH (GB)** |

(54)  **Molding and tentatively retaining mold and method of molding and tentative retention**

(57)      A molding and tentatively retaining mold (10) of the invention has a plurality of molds which are relatively movable with respect to a fixed mold, and molds a housing (31) and rear holders (32) and (33), which are respectively independent, in a plurality of cavities formed in cooperation with the fixed mold. Diameters of runners (20,21) serving as channels for the charging of a resin material into cavities (17,18) of a molding and tentatively retaining mold are set for the respective cavities such that the charging of the resin material into the cavities is completed substantially at the same time.

*FIG. 1*

## Description

The present invention relates to a molding and tentatively retaining mold and a method of molding and tentative retention in which a plurality of kinds of independent parts of different shapes are molded in a plurality of cavities formed between a fixed mold and movable molds, and at least one part after molding is relatively moved with respect to another part by the movable mold so as to set the parts in a tentatively retained state.

The present application is based on Japanese Patent Application No. Hei. 11-361279, which is incorporated herein by reference.

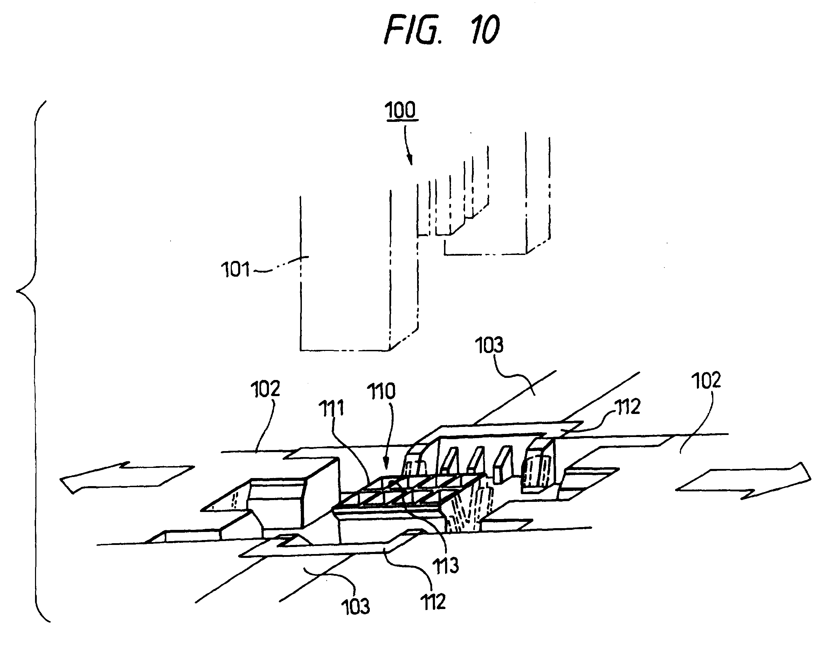

Referring to Fig. 10, as a conventional molding and tentatively retaining mold 100 for effecting the molding and tentative retention of a connector 110 with rear holders in its interior, JP-A-8-250183 discloses one which is comprised of an unillustrated fixed mold, a first movable mold 101 which is movable in vertical directions in Fig. 10, a pair of second movable molds 102 which are movable in left- and rightward directions in Fig. 10, and a pair of third movable molds 103 which are movable in directions substantially perpendicular to the second movable molds 102.

It should be noted that the connector 110 with rear holders is comprised of a housing 111 having a plurality of terminal accommodating chambers 113 and a pair of rear holders 112 which are respectively retained on both sides of the housing 111.

Inner surfaces of the first and second movable molds 101 and 102 respectively form a cavity for molding the housing 111 of the connector 110 with rear holders in cooperation with the fixed mold. In addition, outer surfaces of the first movable mold 101, inner surfaces of the second movable molds 102, and inner surfaces of the third movable molds 103 respectively form cavities for molding the respective rear holders 112 of the connector 110 with rear holders in cooperation with the fixed mold.

In the above-described molding and tentatively retaining mold 100, when the molding and tentative retention of the connector 110 with rear holders is effected, a resin material is charged into the respective cavities, for instance, from the upper direction in Fig. 10 through unillustrated runners for the respective cavities in a state in which the fixed mold and the movable molds 101, 102, and 103 are joined together. consequently, the housing 111 and the rear holders 112 of the connector 110 with rear holders are independently molded, respectively.

Next, the first movable mold 101 is moved upwardly in Fig. 10, and the second movable molds 102 are respectively moved in the directions of arrows in Fig. 10. Consequently, predetermined gaps are respectively produced between the respective rear holders 112 and the housing 111. In this state, the third movable molds 103 are respectively moved toward the housing 111 so as to tentatively retain the rear holders 112 onto the side surfaces of the housing 111, respectively.

After the housing 111 and the rear holders 112 are tentatively retained, the third movable molds 103 are respectively returned to their original positions. Then, the connector 110 with rear holders in the tentatively retained state is released from the mold.

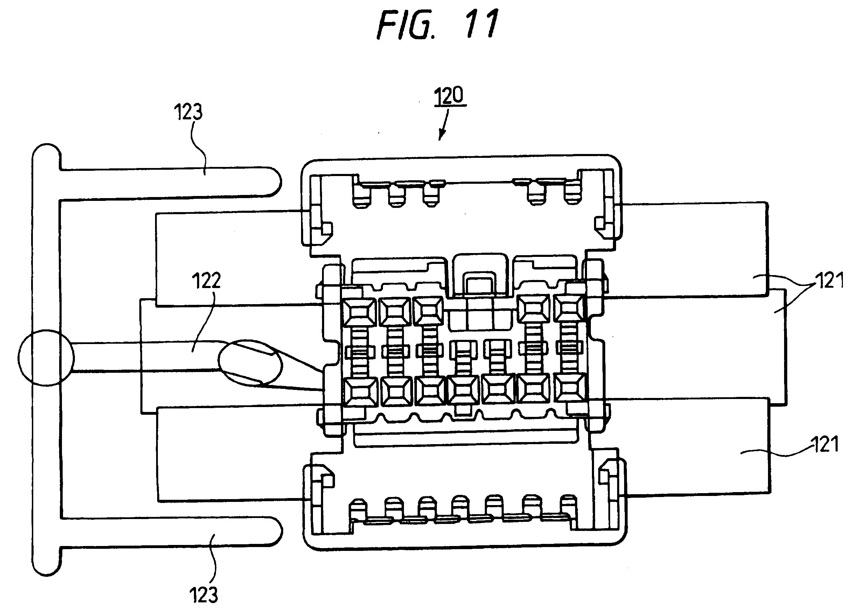

In addition, referring to Fig. 11, a molding and tentatively retaining mold 120 is known in which a resin material is charged into a plurality of cavities formed by a fixed mold (not shown) and a plurality of movable molds 121 from a horizontal direction (from the left direction in Fig. 11) through runners 122 and 123 for the respective cavities.

With each of the above-described conventional molding and tentatively retaining molds 100 and 120, the diameter of the runner 122 for the cavity for the housing 111 and the diameter of the runners 123 for the cavities for the rear holders 112 are identical. For this reason, the time required until the completion of the charging of the resin material into the respective cavities differs, so that there has been a problem in that a molding balance cannot be obtained between the cavities, producing trouble in the tentative retention of the molded parts in the mold.

Namely, the pressure within the cavities for the rear holders 112 which are of small volume increases more than the modurate pressure within the cavity for the housing 111, which results in the occurrence of burrs on the rear holders 112 as moldings. There has been a problem in that if the burrs occur on the rear holders 112, trouble can occur such that the burrs constitute a hindrance and make it impossible to tentatively retain the rear holders 112 onto the housing 111.

The object of the invention is to provide a molding and tentatively retaining mold and a method of molding and tentative retention which make it possible to obtain a molding balance between the cavities for molding a plurality of kinds of parts of different shapes, thereby making it possible to reliably effect the tentative retention of the parts of different shapes after molding.

The above object of the invention can be attained by the following arrangements.

(1) A molding and tentatively retaining mold including a fixed mold, a plurality of movable molds provided in such a manner as to be relatively movable with respect to the fixed mold and adapted to respectively mold a plurality of kinds of independent parts of different shapes in a plurality of cavities formed in cooperation with the fixed mold and to relatively move at least one part with respect to another part after molding so as to set the parts in a tentatively retained state, and runners respectively provided for the cavities to charge a molding material into the cavities, characterized in that

the runners are respectively provided with diameters which are set for the respective cavities so that a molding balance can be obtained in the cavities.

(2) The molding and tentatively retaining mold according to (1), wherein a ratio of the diameter between the runners is set to a value whereby the charging of the molding material into the cavities is completed substantially at the same time.

(3) A method of molding and tentative retention wherein a plurality of kinds of independent parts of different shapes are respectively molded in a plurality of cavities formed between a fixed mold and a plurality of movable molds provided in such a manner as to be relatively movable with respect to the fixed mold by charging a molding material into the cavities through runners respectively provided for the cavities, and at least one part is relatively moved with respect to another part after molding so as to set the parts in a tentatively retained state, characterized in that

the charging of the resin material into the cavities through the runners is completed substantially at the same time.

In the molding and tentatively retaining mold in (1) above in accordance with the invention, a molding material is charged into a plurality of cavities formed between the fixed mold and the movable molds through runners, with the result that a plurality of kinds of independent parts of different shapes are respectively molded in the cavities.

At this juncture, since the runners are respectively provided with diameters which are set for the respective cavities so that a molding balance can be obtained in the cavities, it is possible to obtain a molding balance in the cavities.

After the molding of the respective parts, the movable mold relatively moves at least one part with respect to another part, thereby setting the parts in a tentatively retained state.

In the molding and tentatively retaining mold in (2) above in accordance with the invention, the ratio of the diameter between the runners is set to a value whereby the charging of the molding material into the cavities is completed substantially at the same time. Accordingly, it is possible to obtain a molding balance in the cavities when a plurality of kinds of parts of different shapes are molded by the fixed mold and the movable molds.

In the method of molding and tentative retention in (3) above in accordance with the invention, a molding material is charged into a plurality of cavities formed between a fixed mold and a plurality of movable molds provided in such a manner as to be relatively movable with respect to the fixed mold, through runners respectively provided for the cavities. Consequently, a plurality of kinds of independent parts of different shapes are respectively molded in the cavities.

At this juncture, the charging of the resin material into the cavities through the runners is completed substantially at the same time. Consequently, a molding balance is obtained in the cavities.

After the molding of the respective parts, at least one part is relatively moved with respect to another part, thereby setting the parts in a tentatively retained state.

BRIEF DESCRTPTION OF THE DRAWINGS

Fig. 1 is a schematic plan view illustrating runners for cavities of a molding and tentatively retaining mold and a connector with rear holders in accordance with an embodiment of the invention;

Fig. 2 is a plan view schematically representing Fig. 1;

Fig. 3 is a schematic cross-sectional view illustrating a state during molding by the molding and tentatively retaining mold;

Fig. 4 is a schematic cross-sectional view illustrating a state prior to tentative retention after molding by the molding and tentatively retaining mold;

Fig. 5 is a schematic cross-sectional view illustrating a state during tentative retention by the molding and tentatively retaining mold;

Fig. 6 is a schematic plan view illustrating a state prior to tentative retention by a pair of rear-holder tentatively retaining cylinders of the molding and tentatively retaining mold;

Fig. 7 is a schematic plan view illustrating a state after the tentative retention by the rear-holder tentatively retaining cylinders of the molding and tentatively retaining mold;

Fig. 8 is an exploded perspective view illustrating a connector with rear holders;

Fig. 9 is a perspective view illustrating a state of tentative retention of the connector with rear holders in Fig. 8;

Fig. 10 is a schematic perspective view illustrating a conventional molding and tentatively retaining mold;

Fig. 11 is a schematic plan view illustrating runners for cavities of a conventional molding and tentatively retaining mold and a connector with rear holders; and

Fig. 12 is a graph of a formula of flow analysis.

Referring now to the drawings, a description will be given of an embodiment of the invention.

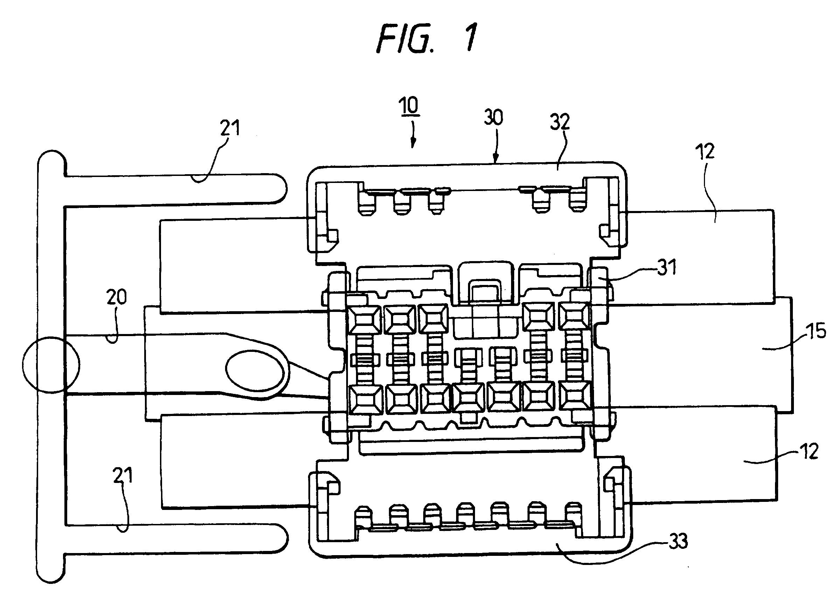

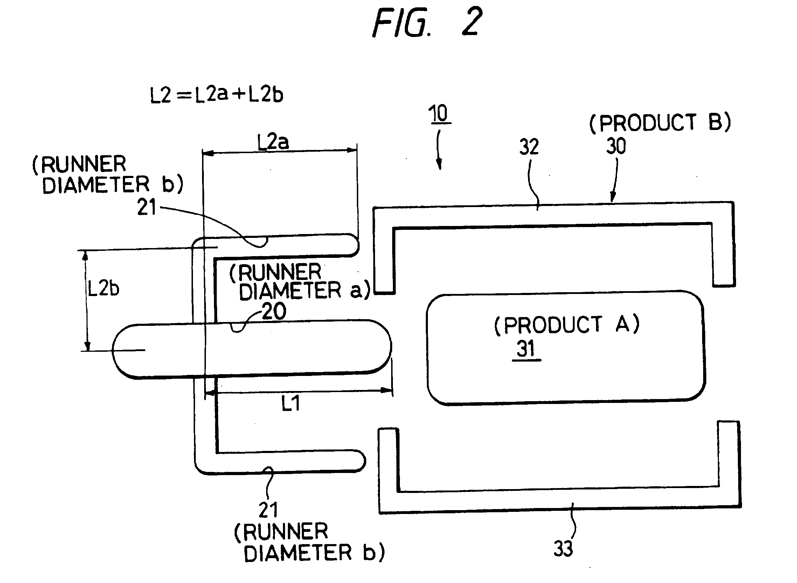

Fig. 1 is a schematic plan view illustrating runners for cavities and a connector with rear holders of a molding and tentatively retaining mold in accordance with an embodiment of the invention. Fig. 2 is a plan view schematically illustrating Fig. 1.

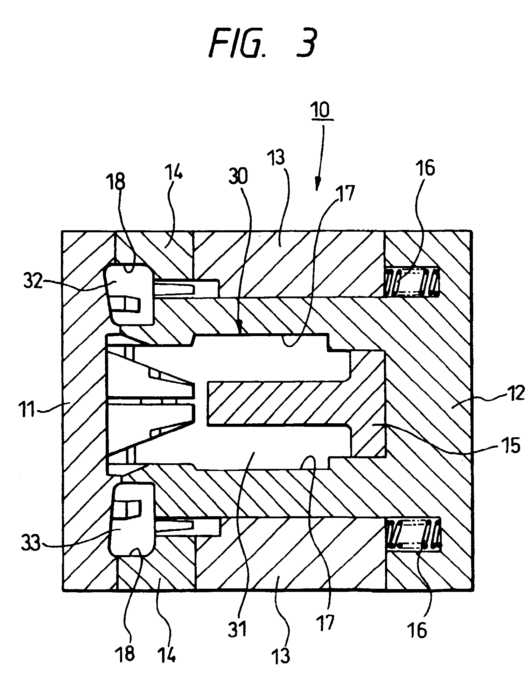

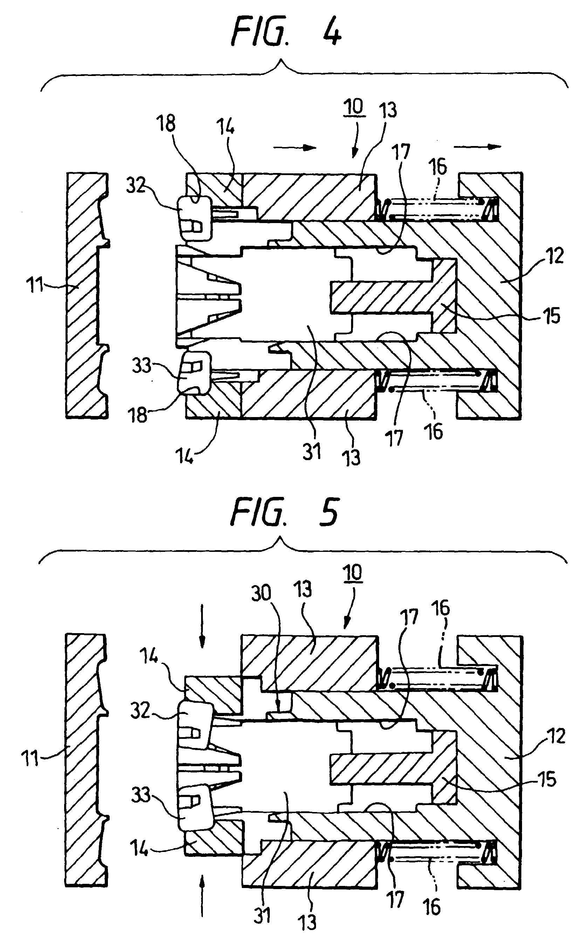

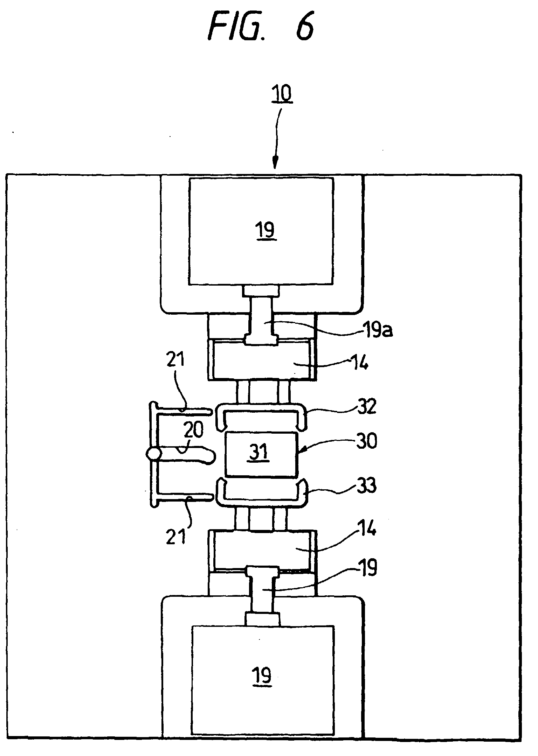

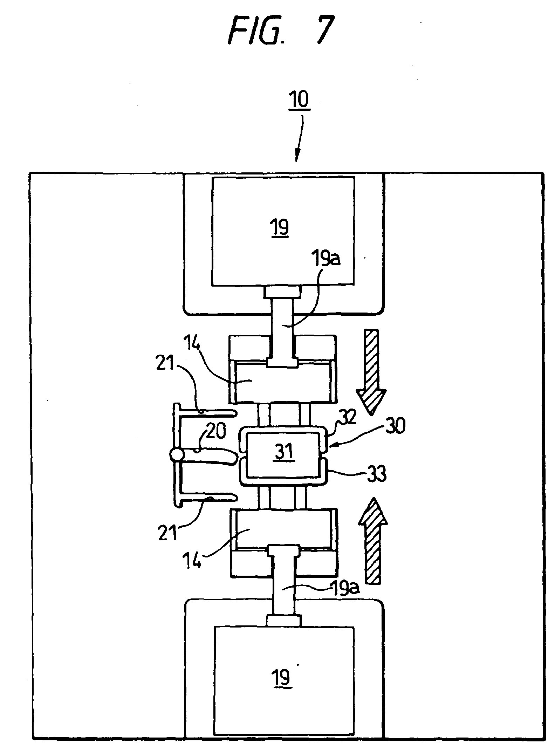

In addition, Fig. 3 is a schematic cross-sectional view illustrating a state during molding by the molding and tentatively retaining mold. Fig. 4 is a schematic cross-sectional view illustrating a state prior to tentative retention after molding by the molding and tentatively retaining mold. Fig. 5 is a schematic cross-sectional view illustrating a state during tentative retention by the molding and tentatively retaining mold. Fig. 6 is a schematic plan view illustrating a state prior to tentative retention by a pair of rear-holder tentatively retaining cylinders of the molding and tentatively retaining mold. Fig. 7 is a schematic plan view illustrating a state after the tentative retention by the rear-holder tentatively retaining cylinders of the molding and tentatively retaining mold.

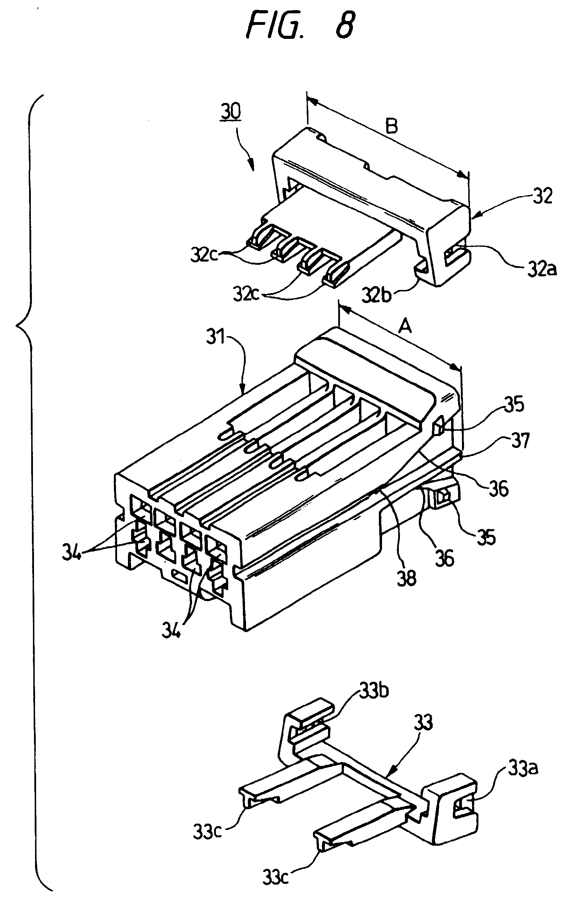

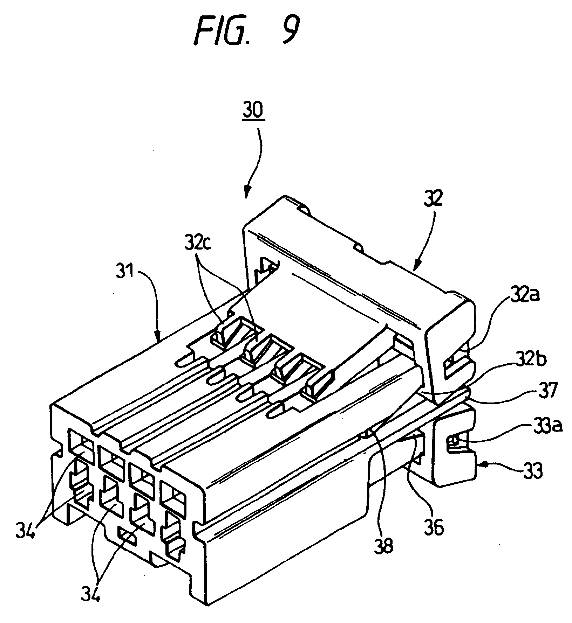

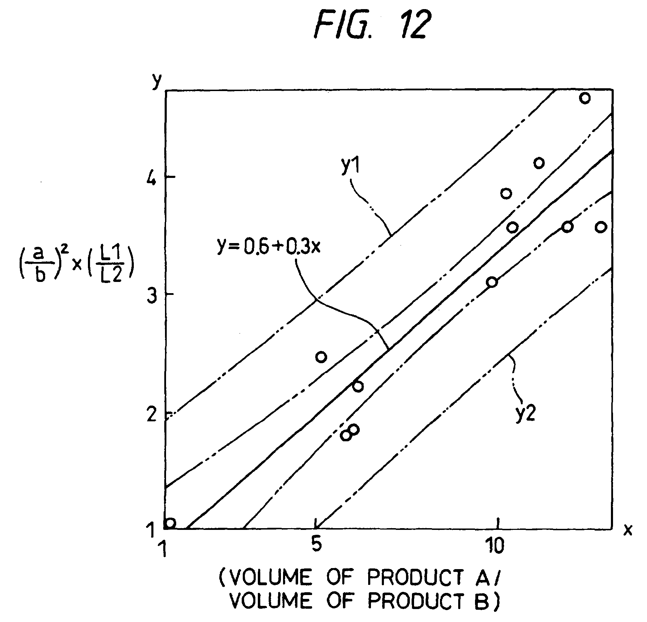

Further, Fig. 8 is an exploded perspective view illustrating a connector with rear holders. Fig. 9 is a perspective view illustrating a state of tentative retention of the connector with rear holders in Fig. 8. Fig. 12 is a graph illustrating a formula of flow analysis.

Referring to Figs. 1 to 7, a molding and tentatively retaining mold 10 is comprised of a fixed mold 11 and first to fourth movable molds 12, 13, 14, and 15, and compression springs 16 are interposed between the first movable mold 12 and the second movable molds 13, respectively. These compression springs 16 constantly urge the first and second movable molds 12 and 13 in directions in which they move away from each other (in the left- and rightward directions in Fig. 3).

The movable molds 12, 13, 14, and 15 are respectively provided in such a manner as to be relatively movable with respect to the fixed mold 11, and mold a housing 31 and rear holders 32 and 33 of a connector 30 with rear holders respectively independently within a plurality of cavities 17 and 18 formed in cooperation with the fixed mold 11. As the rear holders 32 and 33 after molding are relatively moved with respect to the housing 31, the housing 31 and the rear holders 32 and 33 are set in a tentatively retained state.

Inner surfaces of the first movable mold 12 and outer surfaces of the fourth movable mold 15 respectively form the cavity 17 for molding the housing 31 of the connector 30 with rear holders 30 in cooperation with inner surfaces of the fixed mold 11. Further, outer surfaces of the first movable mold 12 and inner surfaces of the third movable molds 14 respectively form the cavities 18 for molding the rear holders 32 and 33 of the connector 30 with rear holders in cooperation with the fixed mold 11.

The second movable molds 13 support the first movable mold 12 movably along the left- and rightward directions in Fig. 3, and support the third movable molds 14 movably along the vertical direction in Fig. 3.

As the third movable molds 14 are moved toward the housing 31 side along the vertical directions in Fig. 3 by a pair of rear-holder tentatively retaining cylinders 19 (see Figs. 6 and 7), the third movable molds 14 tentatively retain the rear holders 32 and 33 onto the housing 31.

The fourth movable mold 15 is supported by the first movable mold 12, is movable in the left- and rightward directions in Fig. 3 in interlocking relation to the first movable mold 12, and holds the housing 31 during the tentative retention of the rear holders 32 and 33.

The fixed mold 11 and the movable molds 12, 13, 14, and 15 are provided with runners 20 and 21 serving as channels for the resin material to be charged for the respective cavities 17 and 18.

The runners 20 and 21 have diameters which are set for the respective cavities 17 and 18 so as to obtain a molding balance in the cavities 17 and 18, respectively. Namely, the ratio of the diameter between the runners 20 and 21 is set to a value whereby the charging of the resin material into the cavities 17 and 18 is completed substantially at the same time. For example, the diameter of the runner 20 for the cavity 17 in the housing 31 is set to about 4-fold in an area ratio with respect to the diameter of the runner 21 for the cavity 18 in each of the rear holders 32 and 33.

More specifically, the ratio of the diameter between the runners 20 and 21 can be determinedby the following formula (1) of flow analysis and Fig. 12. It should be noted that the contents of the items in the formula (1) of flow analysis are shown in Fig. 2.

$$y = 0.6 + 0.3x \qquad (1)$$

where,

y: $(a/b)^2 \times (L1/L2)$
x: (volume of product A / volume of product B)
a: diameter of the runner for product A
b: diameter of the runner for product B
L1: length of the runner for product A
L2: length of the runner for product B
Product A: housing
Product B: rear holder

Fig. 12 is a graph showing the results of analysis in accordance with the aforementioned formula (1) of flow analysis. According to this formula (1) of flow analysis, a preferable relation of the runner diameter can be obtained if the relationship between x and y lies between characteristic curves y1 and y2 in the graph. If the runner diameter is in such a relationship, the charging of the molding resin into the cavities 17 and 18 for molding the housing 30 and the rear holders 32 and 33 is completed substantially at the same time.

Next, referring to Figs. 8 and 9, a detailed description will be given of the connector 30 with rear holders.

Namely, the connector 30 with rear holders includes the housing 31 having a plurality of terminal accommodating chambers 34, as well as the pair of rear holders 32 and 33 which are retained on the upper and lower side surfaces, as viewed in Fig. 1, of the housing 31. Connecting terminals (not shown) attached to wires or the like are respectively inserted into the terminal accommodating chambers 34 of the housing 31, and are electrically connected thereto.

Both left and right side surfaces, as viewed in Fig. 8, of the housing 31 are respectively provided with a pair of upper and lower tentatively retaining projections 35 (as viewed in Fig. 8) having tapered surfaces, a pair of upper and lower retaining steps 36 (as viewed in Fig. 8) formed in a tapered manner, a protecting rib 37, and a finally retaining projection 38.

As each tentatively retaining projection 35 on the upper side in Fig. 8 is fitted in a retaining hole 32a provided in the rear holder 32 on the upper side in Fig. 8 (hereafter, referred to as the upper rear holder 32), the upper tentatively retaining projection 35 tentatively retains the upper rear holder 32 onto the housing 31. Meanwhile, as each tentatively retaining projection 35 on the lower side in Fig. 8 is fitted in a retaining hole 33a provided in the rear holder 33 on the lower side in Fig. 8 (hereafter, referred to as the lower rear holder 33), the lower tentatively retaining projection 35 tentatively retains the lower rear holder 33 onto the housing 31.

When the rear holders 32 and 33 are tentatively retained onto the housing 31 inside the molding and tentatively retaining mold 10, each retaining step 36 on the upper side in Fig. 8 is engaged with a retaining pawl 32b provided on the upper rear holder 32. Meanwhile, when the rear holders 32 and 33 are tentatively retained onto the housing 31 inside the molding and tentatively retaining mold 10, each retaining step 36 on the lower side in Fig. 8 is engaged with a retaining pawl 33b provided on the lower rear holder 33.

The interval A between the protecting ribs 37 on both left and right sides surfaces, as viewed in Fig. 8, of the housing 31 is set to be larger than the transverse width B of each of the rear holders 32 and 33. Consequently, the rear holders 32 and 33 are prevented from coming off the housing 31 when the connector 30 with rear holders in the tentatively retained state is released from the mold.

When the connecting terminals inserted in the connector 30 with rear holders set in the tentatively retained state and released from the mold are primarily retained by housing lances (not shown) in the terminal accommodating chambers 34 in the housing 31, the finally retaining projections 38 are respectively fitted in the retaining holes 32a and 33a of the rear holders 32 and 33, so as to finally retain the rear holders 32 and 33 onto the housing 31. In this state, as secondarily retaining projections 32c and 33c provided on the respective rear holders 32 and 33 are respectively advanced into the terminal accommodating chambers 34 of the housing 31, the connecting terminals are secondarily retained.

A description will be given of the operation in accordance with this embodiment.

In the molding and tentatively retaining mold 10, the resin material is charged into the cavities 17 and 18 for molding the housing 31 and the rear holders 32 and 33 of the connector 30 with rear holders through the runners 20 and 21 corresponding to the cavities 17 and 18 in the state in which the fixed mold 11 and the movable molds 12, 13, 14, and 15 are joined together. Consequently, the housing 31 and the rear holders 32 and 33 are independently molded inside the cavities 17 and 18, respectively.

At this juncture, since the diameters of the runners 20 and 21 are respectively set in correspondence with the volumes of the moldings for the respective cavities 17 and 18, the charging of the resin material into the respective cavities 17 and 18 is completed substantially at the same time.

Therefore, the pressure within the cavities 18 for the rear holders 32 and 33 which are of smaller volume than the cavity 17 for the housing 31 does not increase more than the moderate pressure within the cavity 17 for the housing 31, so that the occurrence of burrs does not occur on the rear holders 32 and 33 as moldings. Consequently, it is possible to prevent the trouble such that the burrs constitute a hindrance and make it impossible to tentatively retain the rear holders 32 and 33 onto the housing 31 after molding.

After the molding of the housing 31 and the rear holders 32 and 33, as the third movable molds 14 relatively move the rear holders 32 and 33 with respect to the housing 31, the connector 30 with rear holders is set in a tentatively retained state.

Referring now to Figs. 3 to 7, a description will be given of a method of molding and tentatively retaining a connector 30 with rear holders by using the molding and tentatively retaining mold 10 in accordance with this embodiment.

Referring to Fig. 3, in the state in which the fixed mold 11 and the movable molds 12, 13, 14, and 15 are joined together, the resin material is first charged into the cavities 17 and 8 formed in the mold through the runners 20 and 21 corresponding to the cavities 17 and 18. As a result, the housing 31 and the rear holders 32 and 33 are respectively molded independently in the cavities 17 and 18.

At this juncture, since the diameters of the runners 20 and 21 are set in correspondence with the volumes of the moldings for the respective cavities 17 and 18, the charging of the resin material into the respective cavities 17 and 18 is completed substantially at the same time.

Next, referring to Fig. 4, the movable molds 12, 13, 14, and 15 are respectively moved from the fixed mold 11 by predetermined amounts in the rightward direction in Fig. 4, and the first movable mold 12 is moved by a predetermined amount in the rightward direction in Fig. 4 with respect to the second movable molds 13 by the urging forces of the compression springs 16.

At this juncture, the fourth movable mold 15 is relatively moved by a predetermined amount with respect to the second movable molds 13 in interlocking relation to the first movable mold 12 up to a position for holding a right end portion, as viewed in Fig. 4, of the molded housing 31 by a left end portion, as viewed in Fig. 4, of the fourth movable mold 15. Further, predetermined gap are formed on the inner sides of the third movable molds 14 by the movement of the first movable mold 12.

Further, referring to Figs. 5 to 7, the third movable molds 14 are respectively moved by the rear-holder tentatively retaining cylinders 19 in the directions of arrows in Figs. 5 and 7, so as to press the molded rear holders 32 and 33, respectively, toward the housing 31 and tentatively retain them onto the housing 31.

Namely, as the rear holders 32 and 33 are respectively pressed by the third movable molds 14 in the directions of arrows in Figs. 5 and 7, the tentatively retaining projections 35 of the housing 31 are fitted in the retaining holes 32a and 33a, and the retaining pows 32b and 33b are fitted to the retaining means 36. Consequently, the rear holders 32 and 33 are respectively tentatively retained onto the housing 31.

As described above, in accordance with the embodiment, the diameters of the runners 20 and 21 serving as channels for the charging of the resin material into the cavities 17 and 18 in the molding and tentatively retaining mold 10 are set for the respective cavities 17 and 18 such that the charging of the resin material into the cavities is completed substantially at the same time.

Accordingly, it is possible to obtain a molding balance between the cavity 17 for the housing 31 and the cavities 18 for the rear holders 32 and 33. Namely, the time required until the completion of the charging of the resin material into the cavities 17 and 18 can be set to be substantially identical, and it is possible to prevent a unnecessary pressure rise in the cavities 18 for the rear holders 32 and 33 of the small volume, thereby making it possible to reliably prevent the trouble such as the occurrence of burrs on the rear holders 32 and 33 as the moldings.

Consequently, when the housing 31 and the rear holders 32 and 33 are tentatively retained after molding, it is possible to reliably prevent the trouble such that the burrs occurring on the rear holders 32 and 33 constitute a hindrance and make it impossi ble to effect tentative retention, so that it is possible to reliably effect the tentative retention of the housing 31 and the rear holders 32 and 33 after molding.

As described above, in accordance with the invention, since the runners are respectively provided with diameters which are set for the respective cavities so that a molding balance can be obtained in the cavities for molding a plurality of kinds of parts of different shapes, it is possible to obtain a molding balance between the cavities. Consequently, it is possible to reliably effect the tentative retention of the parts of different shapes after molding.

In addition, a ratio of the diameter between the runners is set to a value whereby the charging of the molding material into the cavities is completed substantially at the same time. Accordingly, it is possible to obtain a molding balance between the cavities. Consequently, it is possible to reliably effect the tentative retention of the parts of different shapes after molding.

In addition, in accordance with the invention, since the charging of the resin material into the cavities through the runners is completed substantially at the same time, it is possible to obtain a molding balance between the cavities. Consequently, it is possible to reliably effect the tentative retention of the parts of different shapes after molding.

## Claims

1. A molding and tentatively retaining mold comprising:

    a fixed mold;
    a plurality of movable molds provided in such a manner as to be relatively movable with respect to said fixed mold and adapted to respectively mold a plurality of kinds of independent parts of different shapes in a plurality of cavities formed in cooperation with said fixed mold, and to relatively move at least one part with respect to another part after molding so as to set said parts in a tentatively retained state; and
    a plurality of runners respectively provided for the cavities to charge a molding material into the cavities;
        wherein, said runners are respectively provided with diameters which are set for the respective cavities so that a molding balance can be obtained in the cavities.

2. A molding and tentatively retaining mold according to claim 1,
        wherein a ratio of the diameters between said runners is set to a value whereby the charging of the molding material into the cavities is completed substantially at the same time.

3. A method of molding and tentatively retaining, comprising the steps of:

    forming a plurality of cavities between a fixed mold and a plurality of movable molds provided in such a manner as to be relatively movable with respect to said fixed mold;
    charging a molding material for each of said cavities through runners respectively provided for said cavities to complete substantially at the same time;
    molding a plurality of kinds of independent parts of different shapes in said cavities; and
    moving relatively said at least one movable mold with respect to said another movable mold, so as to tentatively retain at least one of said parts to said other part.

4. A mold comprising:

   a fixed mold;
   a plurality of movable molds provided in such a manner as to be relatively movable with respect to said fixed mold and adapted to respectively mold a plurality of kinds of independent parts of different shapes in a plurality of cavities formed in cooperation with said fixed mold; and
   a plurality of runners respectively provided for the cavities to charge a molding material into the cavities;
   wherein, said runners are respectively provided with diameters which are set for the respective cavities so that a molding balance can be obtained in the cavities.

5. A mold according to claim 4,
   wherein a ratio of the diameters between said runners is set to a value whereby the charging of the molding material into the cavities is completed substantially at the same time.

6. A method of molding, comprising the steps of:

   forming a plurality of cavities between a fixed mold and a plurality of movable molds provided in such a manner as to be relatively movable with respect to said fixed mold;
   charging a molding material for each of said cavities through runners respectively provided for said cavities to complete substantially at the same time; and
   molding a plurality of kinds of independent parts of different shapes in said cavities.

FIG. 1

# FIG. 2

$$L2 = L2a + L2b$$

L2a

(RUNNER
DIAMETER b)
21

L2b

(RUNNER
DIAMETER a)
20

L1

21
(RUNNER
DIAMETER b)

10

32

30

(PRODUCT B)

(PRODUCT A)
31

33

EP 1 110 705 A1

# FIG. 3

## FIG. 4

## FIG. 5

# FIG. 6

# FIG. 7

# FIG. 8

FIG. 9

FIG. 10

FIG. 11

# FIG. 12

EP 1 110 705 A1

<table>
<tr><td>European Patent<br>Office</td><td><strong>EUROPEAN SEARCH REPORT</strong></td><td>Application Number<br>EP 00 31 1376</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | EP 0 733 463 A (SUMITOMO WIRING SYSTEMS) 25 September 1996 (1996-09-25) * the whole document * | 1-6 | B29C69/00 B29C45/27 |
| P,Y | DE 199 59 396 A (KOITO MFG CO LTD) 21 June 2000 (2000-06-21) * claims 1-3; figures * | 1-6 | |
| Y | US 5 849 236 A (TATHAM GLENN L) 15 December 1998 (1998-12-15) * the whole document * | 1-6 | |
| Y | PATENT ABSTRACTS OF JAPAN vol. 10, no. 33 (M-452), 8 February 1986 (1986-02-08) & JP 60 189411 A (MATSUSHITA DENKI SANGYO KK), 26 September 1985 (1985-09-26) * abstract * | 1-6 | |
| Y | PATENT ABSTRACTS OF JAPAN vol. 16, no. 384 (M-1296), 17 August 1992 (1992-08-17) & JP 04 126214 A (FUJI PHOTO FILM CO LTD), 27 April 1992 (1992-04-27) * abstract * | 1-6 | TECHNICAL FIELDS SEARCHED (Int.Cl.7)<br><br>B29C |

The present search report has been drawn up for all claims

| Place of search | Date of completion of the search | Examiner |
|---|---|---|
| THE HAGUE | 3 April 2001 | Bollen, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03 82 (P04C01)

**ANNEX TO THE EUROPEAN SEARCH REPORT
ON EUROPEAN PATENT APPLICATION NO.**   EP 00 31 1376

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2001

| Patent document cited in search report | | Publication date | Patent family member(s) | | Publication date |
|---|---|---|---|---|---|
| EP 0733463 | A | 25-09-1996 | JP | 3000883 B | 17-01-2000 |
| | | | JP | 8250183 A | 27-09-1996 |
| | | | JP | 3013739 B | 28-02-2000 |
| | | | JP | 8250184 A | 27-09-1996 |
| | | | JP | 9011239 A | 14-01-1997 |
| | | | CN | 1135402 A | 13-11-1996 |
| | | | EP | 1009062 A | 14-06-2000 |
| | | | US | 5961910 A | 05-10-1999 |
| | | | US | 5814356 A | 29-09-1998 |
| | | | JP | 8309769 A | 26-11-1996 |
| | | | JP | 8309766 A | 26-11-1996 |
| | | | JP | 8309767 A | 26-11-1996 |
| | | | JP | 8309768 A | 26-11-1996 |
| | | | JP | 8336840 A | 24-12-1996 |
| | | | JP | 9048029 A | 18-02-1997 |
| DE 19959396 | A | 21-06-2000 | JP | 2000167878 A | 20-06-2000 |
| | | | CN | 1256996 A | 21-06-2000 |
| | | | GB | 2346341 A | 09-08-2000 |
| US 5849236 | A | 15-12-1998 | NONE | | |
| JP 60189411 | A | 26-09-1985 | NONE | | |
| JP 04126214 | A | 27-04-1992 | NONE | | |

EPO FORM P0459

For more details about this annex : see Official Journal of the European Patent Office, No. 12/82